# FASCICULE DE BREVET EUROPEEN

(11) **EP 2 876 814 B1**
(45) Date de publication et mention de la délivrance du brevet: **29.06.2016**
(21) Numéro de dépôt: 14193913.2
(22) Date de dépôt: 19.11.2014
(51) Int. Cl.: H04B 1/00, H04B 7/185

(54) **Dispositif d'émission et de réception par satellite à fort taux d'atténuation des multi-trajets, répéteur et satellite équipés d'un tel dispositif**
Sende- und Empfangsvorrichtung über Satellit mit starker Mehrwegedämpfung, Leistungsverstärker und Satellit, die mit einer solchen Vorrichtung ausgestattet sind
Satellite transmission and reception device with high multipath attenuation, repeater and satellite provided with such a device

(30) Priorité: 22.11.2013 FR 1302692
(43) Date de publication de la demande: 27.05.2015
(73) Titulaire: Thales, 92200 Neuilly Sur Seine (FR)
(72) Inventeur: Maillet, Olivier, 31037 TOULOUSE Cedex (FR); Maffert, Adrien, 31037 TOULOUSE Cedex (FR); Cachera, Rudy, 31037 TOULOUSE Cedex (FR); Cartier, Nicolas, 31037 TOULOUSE Cedex (FR)
(74) Mandataire: Nguyen, Dominique

(56) Documents cités:
- EP-A1- 2 337 238
- EP-A2- 2 654 219
- US-A- 4 479 255

## Description

La présente invention concerne un dispositif d'émission et de réception par satellite à fort taux d'atténuation des multi-trajets, un répéteur et un satellite équipés d'un tel dispositif. Elle s'applique particulièrement au domaine des télécommunications par satellite.

Les répéteurs montés à bord des satellites de communication connus comportent des systèmes d'émission et de réception qui reposent sur des architectures transparentes offrant des liaisons montantes entre au moins une station terrestre et le répéteur et des liaisons descendantes entre le répéteur et une pluralité d'utilisateurs. Les systèmes d'émission et de réception peuvent couvrir une zone de couverture géographique terrestre au moyen d'un unique faisceau formant un simple spot au sol ou au moyen de plusieurs faisceaux formant des multi-spots au sol.

Le document EP2337238 concerne un système d'émission et de réception multi-spots à bord d'un satellite.

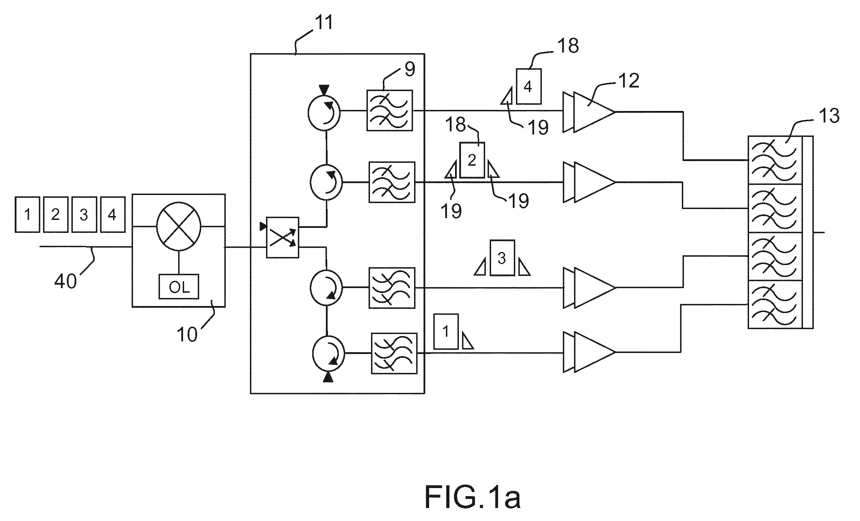

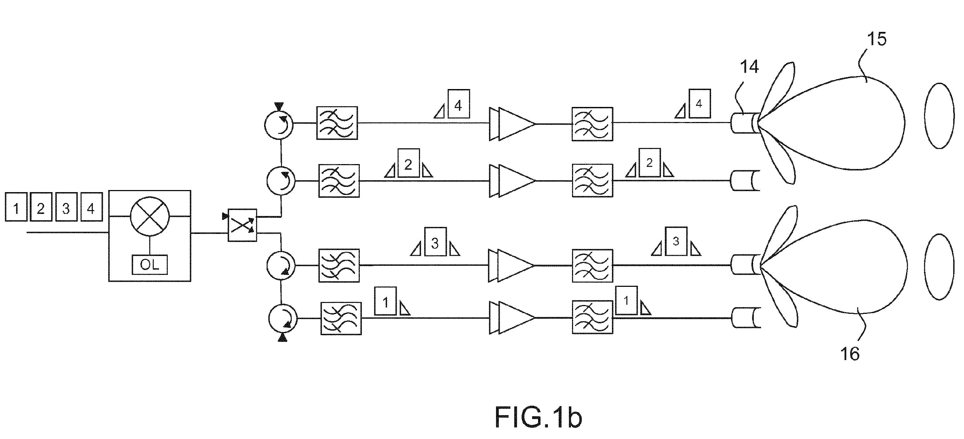

Les figures 1a et 1b montrent deux exemples d'architecture d'un système d'émission et de réception d'une charge utile actuelle offrant des liaisons montantes et descendantes, respectivement à couverture simple spot et à couverture multi-spots. Le répéteur comporte un récepteur de signaux 10 destiné à recevoir des signaux radiofréquence 40 provenant d'une liaison montante, telle que par exemple une station terrestre. Les signaux radiofréquence émis par une station terrestre occupent généralement une large bande de fréquence. Dans le récepteur de signaux 10, les signaux 40 à large bande reçus sont transposés en fréquence par un convertisseur de fréquence pour passer de la bande de fréquence de réception vers la bande de fréquence d'émission dédiée aux utilisateurs. Le convertisseur de fréquence est commandé par un oscillateur local OL, l'oscillateur local pouvant fonctionner à une fréquence fixe prédéterminée ou à une fréquence modifiable par télécommande. Après la conversion de fréquence, le signal à large bande transposé en fréquence est ensuite transmis à un démultiplexeur d'entrée IMUX 11 qui scinde et filtre le signal large bande en plusieurs sous-bandes de fréquence différentes. Chaque sous-bande de fréquence, appelée aussi canal, est ensuite amplifiée par un amplificateur de puissance dédié 12 avant d'être retransmise vers les utilisateurs terrestres. Dans une architecture à couverture simple spot telle que représentée sur l'exemple de la figure 1a, les signaux acheminés dans les différents canaux 1, 2, 3, 4 sont recombinés dans un multiplexeur de sortie OMUX 13 pour former un chemin unique avant d'être émis vers les utilisateurs, par une source d'antenne d'émission unique non représentée. Dans une architecture multi-spots telle que représentée sur la figure 1b, les signaux acheminés dans les différents canaux sont émis sous forme de faisceaux indépendants les uns des autres par des sources d'émission 14 d'une antenne d'émission, les signaux émis dans deux faisceaux adjacents 15, 16 pouvant se recombiner, dans une zone de recouvrement non représentée, lors de leur rayonnement. L'antenne d'émission qui assure la couverture multifaisceaux peut être du type une source par faisceau ou du type multi-sources par faisceau. Dans le cas d'une antenne de type multi-sources par faisceau, un réseau formateur de faisceau est utilisé.

Ces deux architectures présentent un problème important dû au fait que les filtres 9 du démultiplexeur d'entrée 11 qui assurent le filtrage des différentes sous-bandes de fréquence 1 à 4 ne sont pas parfaits et laissent passer, dans chaque canal, des fréquences parasites appartenant aux sous-bandes attribuées aux canaux adjacents. Chaque canal transporte donc un signal principal 18 dont la fréquence est comprise dans la sous-bande de fréquence dédiée au canal correspondant et des signaux parasites 19 dont les fréquences sont situées dans les sous-bandes de fréquence adjacentes. Les différents canaux forment alors différents trajets possibles pour les signaux reçus dans les différentes sous-bandes de fréquence filtrées. Les signaux de même fréquence acheminés dans deux transpondeurs adjacents différents et ayant donc empruntés des trajets différents ont des niveaux d'amplitude et de phase différents mais sont cohérents entre eux. Lors de la recombinaison des signaux issus des différents canaux, dans le multiplexeur de sortie ou par rayonnement, les signaux principaux et les signaux parasites de même fréquence issus de canaux adjacents se recombinent alors entre eux de façon cohérente, ce qui modifie le gain et la variation de la loi de retard et détériore la qualité de la liaison. La contribution des signaux parasites, ayant empruntés des trajets différents du trajet principal, à l'amplitude et à la phase du signal rayonné sont classiquement appelés des effets de multi-trajets.

Pour résoudre ce problème, dans le cas où les signaux sont recombinés par un multiplexeur de sortie, les bandes de fréquence de deux filtres adjacents sont généralement séparées par une bande de garde, ce qui permet de garantir une bonne isolation fréquentielle entre deux canaux adjacents et de diminuer les effets des multi-trajets. Cependant, cette solution présente l'inconvénient de diminuer la largeur de la bande de fréquence qui peut être utilisée pour les signaux à transmettre.

Dans le cas d'une couverture multi-spots où les signaux de même fréquence peuvent se recombiner par rayonnement, les faisceaux rayonnés par les sources d'émission de chaque canal sont généralement isolés spatialement les uns des autres pour assurer une isolation spatiale suffisante entre deux faisceaux. Cette solution impose des contraintes importantes d'allocation de fréquence sur les faisceaux adjacents et est très contraignante pour le dimensionnement du répéteur.

Le but de l'invention est de remédier aux inconvénients des solutions connues et de réaliser un dispositif d'émission et de réception par satellite à fort taux d'atténuation des multi-trajets, permettant de minimiser la bande de garde entre les bandes de fréquence allouées à deux canaux adjacents et permettant de réduire les contraintes de dimensionnement du répéteur dues aux multi-trajets.

Pour cela, l'invention concerne un dispositif d'émission et de réception par satellite à fort taux d'atténuation des multi-trajets, le dispositif étant destiné à recevoir et à traiter des signaux radiofréquence provenant d'une liaison montante puis à émettre les signaux traités sur une liaison descendante vers des utilisateurs terrestres, caractérisé en ce qu'il comporte, à la réception, un diviseur de puissance comportant deux sorties respectivement connectées à deux convertisseurs de fréquence indépendants et deux démultiplexeurs d'entrée connectés respectivement en sortie des deux convertisseurs de fréquence correspondants, chaque convertisseur de fréquence étant commandé par un oscillateur local dédié, les deux oscillateurs locaux fonctionnant à une même fréquence, les deux démultiplexeurs d'entrée comportant des filtres de canaux fonctionnant dans des sous-bandes de fréquence différentes, disjointes et espacées en fréquence les unes des autres, deux sous-bandes de fréquence adjacentes étant filtrées par deux filtres de canaux appartenant à des démultiplexeurs d'entrée différents.

Avantageusement, les sous-bandes de fréquence des filtres du deuxième démultiplexeur d'entrée sont décalées en fréquence par rapport aux sous-bandes de fréquence des filtres du premier démultiplexeur d'entrée, le décalage en fréquence étant égal à au moins une largeur de sous-bande de fréquence.

L'invention concerne aussi un répéteur de satellite comportant un tel dispositif d'émission et de réception et un satellite comportant un tel répéteur.

D'autres particularités et avantages de l'invention apparaîtront clairement dans la suite de la description donnée à titre d'exemple purement illustratif et non limitatif, en référence aux dessins schématiques annexés qui représentent :
- figures 1a et 1b : deux exemples d'architecture d'un système d'émission et de réception d'un répéteur offrant des liaisons montantes et descendantes à couverture simple spot et respectivement, à couverture multi-spots, selon l'art antérieur;
- figures 2a et 2b : deux exemples d'architecture d'un système d'émission et de réception d'un répéteur offrant des liaisons montantes et descendantes à couverture simple spot et respectivement, à couverture multi-spots, selon l'invention;

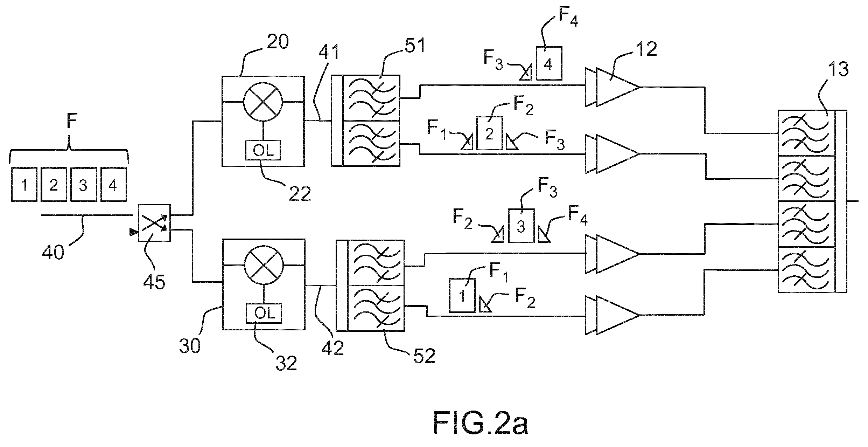

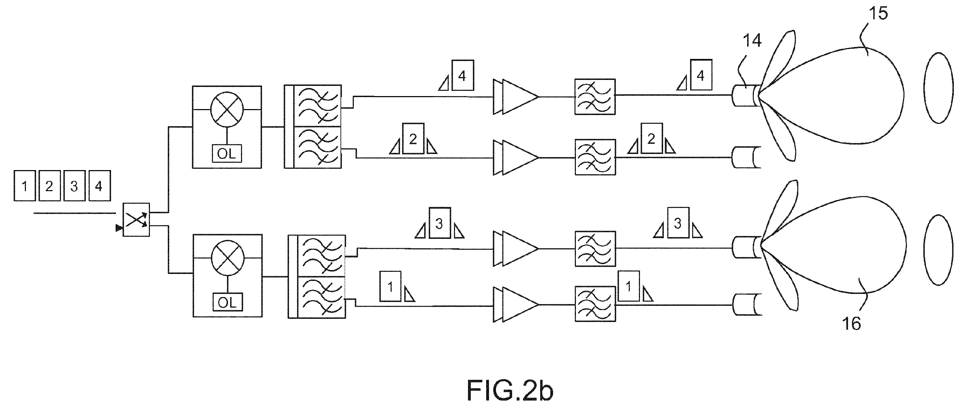

Sur les figures 2a et 2b, conformément à l'invention, le système d'émission et de réception du répéteur comporte un diviseur de puissance 45 destiné à diviser la puissance d'un signal radiofréquence 40 d'entrée par deux et à appliquer les deux signaux issus de la division, respectivement en entrée de deux convertisseurs de fréquence 20, 30 indépendants. Chaque convertisseur de fréquence 20, 30 est destiné à recevoir et à traiter en parallèle, les signaux radiofréquence 40, à large bande de fréquence F, provenant d'une même liaison montante. Les deux convertisseurs de fréquence 20, 30 comportent chacun un oscillateur local 22, 32 et peuvent comporter en outre, un amplificateur d'entrée à faible bruit et un amplificateur de sortie, non représentés. Chaque convertisseur de fréquence 20, 30 assure la transposition des signaux 40 à large bande de fréquence reçus, de la bande de fréquence de réception vers la bande de fréquence d'émission dédiée aux utilisateurs. Les oscillateurs locaux 22, 32 des deux convertisseurs de fréquence 20, 30 fonctionnent sur une même fréquence, les signaux 40 à large bande sont donc transposées à la même fréquence par les deux convertisseurs de fréquence 20, 30. Comme les deux convertisseurs de fréquence 20, 30 utilisent des oscillateurs locaux différents 22, 32, ils délivrent des signaux ayant des bruits de phase et des variations de phase non corrélés. Les phases relatives entre les signaux issus des deux convertisseurs de fréquence 20, 30 varient donc au cours du temps et les signaux transposés en fréquence par les deux convertisseurs de fréquence 20, 30 ne sont pas cohérents entre eux. Les signaux de sortie 41, 42 des deux convertisseurs de fréquence 20, 30 sont donc identiques mais ne sont pas cohérents entre eux. Après la conversion de fréquence, le signal de sortie 41 du premier convertisseur de fréquence 20, respectivement le signal de sortie 42 du second convertisseur de fréquence 30 est transmis à un premier démultiplexeur d'entrée 51, respectivement à un second démultiplexeur d'entrée 52, chaque démultiplexeur d'entrée 51, 52 étant destiné à scinder chaque signal de sortie respectif 41, 42 en plusieurs sous-bandes de fréquence différentes, de même largeur, correspondant à des canaux différents. Les sous-bandes de fréquence attribuées aux canaux issus d'un même démultiplexeur, sont espacées en fréquence d'une largeur de bande supérieure ou égale à la largeur de bande attribuée à chaque canal, les sous-bandes de fréquence filtrées par le deuxième démultiplexeur 52 étant intercalées entre les sous-bandes de fréquence filtrées par le premier démultiplexeur 51. Ainsi, deux sous-bandes de fréquence adjacentes (F1, F2) (F3, F4) sont filtrées par deux filtres de canaux appartenant à des démultiplexeurs d'entrée différents 52, 51. Un canal sur deux est donc filtré par le premier démultiplexeur 51 et un canal sur deux est filtré par le second démultiplexeur 52.

Les différentes sous-bandes de fréquence sont disjointes c'est-à-dire qu'elles ne comportent aucune fréquence en commun. Sur les figures 2a et 2b, la bande de fréquence F du signal 40 reçu par les deux récepteurs 20, 30 est scindée en deux premières sous-bandes de fréquence différentes F2, F4 par le premier démultiplexeur 51 et en deux secondes sous-bandes de fréquence différentes F1, F3 par le deuxième démultiplexeur 52, les deux premières et les deux secondes sous-bandes de fréquence formant quatre sous-bandes de fréquence différentes et disjointes F1, F2, F3, F4 auxquelles sont respectivement attribués quatre canaux différents 1, 2, 3, 4. Les canaux 1 et 3 sont attribués aux signaux de fréquence F1 et F3 séparés et filtrés par le deuxième démultiplexeur 52 et les canaux 2 et 4 sont attribués aux signaux de fréquence F2 et F4 séparés et filtrés par le premier démultiplexeur 51. Seuls les signaux filtrés par un même démultiplexeur sont cohérents entre eux car ils proviennent d'un même récepteur donc d'un même oscillateur local. Dans les exemples des figures 2a et 2b, les signaux circulant dans les canaux 1 et 3 sont cohérents entre eux et les signaux circulant dans les canaux 2 et 4 sont cohérents entre eux, mais les signaux circulant dans les canaux 2 et 3 et les signaux circulant dans les canaux 1 et 4 ne sont pas cohérents entre eux. En raison de l'imperfection des quatre filtres destinés à filtrer respectivement les quatre sous-bandes de fréquence F1 à F4, dans chaque canal, circulent un signal principal ayant une fréquence comprise dans la bande de fréquence attribuée au canal correspondant et des signaux parasites d'intensité plus faible ayant des fréquences comprises dans des bandes de fréquence contigües attribuées à d'autres canaux. L'intensité des signaux parasites décroît lorsque leur fréquence s'éloigne de la bande de fréquence attribuée au canal dans lequel ils circulent. Ainsi, dans les exemples des figures 2a et 2b, dans le premier canal 2 circulent un signal principal dont la fréquence est comprise dans la bande de fréquence F2 attribuée au premier canal 2 et des signaux parasites dont les fréquences sont situées dans des bandes de fréquence F1 et F3 attribuées respectivement aux troisième et quatrième canaux 1 et 3. De même, dans le quatrième canal 3 circulent un signal principal dont la fréquence est comprise dans la bande de fréquence F3 attribuée au quatrième canal 3 et des signaux parasites dont les fréquences sont comprises dans des bandes de fréquence F2 et F4 attribuées respectivement aux premier et deuxième canaux 2 et 4. Dans le troisième canal 1 circulent un signal principal dont la fréquence est comprise dans la bande de fréquence F1 attribuée au troisième canal 1 et des signaux parasites dont les fréquences sont comprises dans la bande de fréquence F2 attribuée au premier canal 2. Dans le deuxième canal 4 circulent un signal principal dont la fréquence est comprise dans la bande de fréquence F4 attribuée au deuxième canal 4 et des signaux parasites dont les fréquences sont comprises dans la bande de fréquence F3 attribuée au quatrième canal 3. Cependant, comme les signaux ayant des fréquences comprises dans des bandes de fréquence adjacentes ne sont pas cohérents entre eux, les signaux parasites circulant dans des canaux qui ne leur sont pas dédiés ne sont pas cohérents avec les signaux principaux de même fréquence circulant dans le canal qui leur est dédié. Ainsi, sur les exemples des figures 2a et 2b, les signaux parasites ayant une fréquence située dans la bande de fréquence F1 attribuée au troisième canal 1 mais qui circulent dans le premier canal 2 ne sont pas cohérents avec le signal principal de même fréquence F1 circulant dans le troisième canal 1. De même, les signaux parasites ayant une fréquence située dans la bande de fréquence F3 attribuée au quatrième canal 3 mais qui circulent dans le premier canal 2 et dans le deuxième canal 4 ne sont pas cohérents avec le signal principal de même fréquence F3 circulant dans le quatrième canal 3. De même, les signaux parasites ayant une fréquence située dans la bande de fréquence F2 attribuée au premier canal 2 mais qui circulent dans le troisième canal 1 et dans le quatrième canal 3 ne sont pas cohérents avec le signal principal de même fréquence 2 circulant dans le premier canal 2. Enfin les signaux parasites ayant une fréquence située dans la bande de fréquence F4 attribuée au deuxième canal 4 mais qui circulent dans le troisième canal 3 ne sont pas cohérents avec le signal principal de même fréquence F4 circulant dans le deuxième canal 4. Par conséquent, les différents signaux parasites qui circulent dans chaque canal ne sont jamais cohérents avec les signaux principaux de même fréquence.

Lors de la recombinaison des signaux provenant des différents canaux, les signaux parasites et les signaux principaux de même fréquence étant non cohérents entre eux, les signaux parasites ont un effet sur le signal rayonné comparable à du bruit, cet effet étant beaucoup plus faible et beaucoup moins destructeur que dans les systèmes d'émission et de réception actuels. Les effets dus aux signaux parasites étant beaucoup plus faibles, le niveau de séparation entre les différents canaux peut être considérablement réduit, ce qui permet d'obtenir des largeurs de bandes utiles plus importantes, et les performances du système d'émission et de réception dans la bande utile sont bien meilleures que dans une architecture classique.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif d'émission et de réception par satellite à fort taux d'atténuation des multi-trajets, le dispositif étant destiné à recevoir et à traiter des signaux radiofréquence (40) provenant d'une liaison montante puis à émettre les signaux traités sur une liaison descendante vers des utilisateurs terrestres, **caractérisé en ce qu'**il comporte, à la réception, un diviseur de puissance (45) comportant deux sorties respectivement connectées à deux convertisseurs de fréquence (20, 30) indépendants et deux démultiplexeurs d'entrée (51, 52) connectés respectivement en sortie des deux convertisseurs de fréquence (20, 30) correspondants, chaque convertisseur de fréquence (20, 30) étant commandé par un oscillateur local (22, 32) dédié, les deux oscillateurs locaux (22, 32) fonctionnant à une même fréquence, les deux démultiplexeurs d'entrée (51, 52) comportant des filtres de canaux fonctionnant dans des sous-bandes de fréquence (F1, F2, F3, F4) différentes, disjointes et espacées en fréquence les unes des autres, deux sous-bandes de fréquence adjacentes (F1, F2) (F3, F4) étant filtrées par deux filtres de canaux appartenant à des démultiplexeurs d'entrée différents (52, 51).

2. Dispositif d'émission et de réception selon la revendication 1, **caractérisé en ce que** les sous-bandes de fréquence (F1, F3) des filtres du deuxième démultiplexeur d'entrée (52) sont décalées en fréquence par rapport aux sous-bandes de fréquence (F2, F4) des filtres du premier démultiplexeur d'entrée (51), le décalage en fréquence étant égal à au moins une largeur de sous-bande de fréquence.

3. Répéteur de satellite **caractérisé en ce qu'**il comporte un dispositif d'émission et de réception selon l'une des revendications précédentes.

4. Satellite **caractérisé en ce qu'**il comporte un répéteur selon la revendication 3.

## Patentansprüche

1. Satellitensende- und -empfangsvorrichtung mit hoher Mehrpfaddämpfung, wobei die Vorrichtung zum Empfangen und Verarbeiten von von einer Uplink stammenden Funkfrequenzsignalen (40), dann zum Senden der verarbeiteten Signale auf einer Downlink zu bodengestützten Benutzern gedacht ist, **dadurch gekennzeichnet, dass** sie für den Empfang einen Leistungsteiler (45) mit zwei jeweils mit zwei unabhängigen Frequenzwandlern (20, 30) verbundenen Ausgängen und zwei jeweils mit dem Ausgang der beiden entsprechenden Frequenzwandler (20, 30) verbundenen Eingangsdemultiplexern (51, 52) umfasst, wobei jeder Frequenzwandler (20, 30) von einem dedizierten Lokaloszillator (22, 32) gesteuert wird, wobei die beiden Lokaloszillatoren (22, 32) auf einer selben Frequenz arbeiten, wobei die beiden Eingangsdemultiplexer (51, 52) Kanalfilter umfassen, die in unterschiedlichen Frequenzsubbändern (F1, F2, F3, F4) arbeiten, die frequenzmäßig voneinander getrennt und beabstandet sind, wobei zwei benachbarte Frequenzsubbänder (F1, F2) (F3, F4) von zwei Kanalfiltern gefiltert werden, die zu unterschiedichen Eingangsdemultiplexern (52, 51) gehören.

2. Sende- und -empfangsvorrichtung nach Anspruch 1, **dadurch gekennzeichnet, dass** die Frequenzsubbänder (F1, F3) der Filter des zweiten Eingangsdemultiplexers (52) relativ zu den Frequenzsubbändern (F2, F4) der Filter des ersten Eingangsdemultiplexers (51) frequenzverschoben sind, wobei die Frequenzverschiebung wenigstens gleich einer Frequenzsubbandbreite ist.

3. Satelliten-Repeater, **dadurch gekennzeichnet, dass** er eine Sende- und Empfangsvorrichtung nach einem der vorherigen Ansprüche umfasst.

4. Satellit, **dadurch gekennzeichnet, dass** er einen Repeater nach Anspruch 3 umfasst.

## Claims

1. A satellite transmission and reception device with high multipath attenuation, said device being intended to receive and process radio frequency signals (40) originating from an uplink, then to transmit the processed signals on a downlink towards ground-based users, **characterised in that** it comprises, for reception, a power splitter (45) comprising two outputs respectively connected to two independent frequency converters (20, 30) and two input demultiplexers (51, 52), which are respectively connected to the output of the two corresponding frequency converters (20, 30), each frequency converter (20, 30) being controlled by a dedicated local oscillator (22, 32), said two local oscillators (22, 32) operating at the same frequency, said two input demultiplexers (51, 52) comprising channel filters operating in different frequency sub-bands (F1, F2, F3, F4), distinct and spaced apart from each other in terms of frequency, two adjacent frequency sub-bands (F1, F2) (F3, F4) being filtered by two channel filters belonging to different input demultiplexers (52, 51).

2. The transmission and reception device according to claim 1, **characterised in that** said frequency sub-bands (F1, F3) of the filters of the second input demultiplexer (52) are frequency shifted relative to the frequency sub-bands (F2, F4) of the filters of the first input demultiplexer (51), the frequency shift being equal to at least one frequency subband width.

3. A satellite repeater, **characterised in that** it comprises a transmission and reception device according to any one of the preceding claims.

4. A satellite, **characterised in that** it comprises a repeater according to claim 3.
